# FASCICULE DE BREVET EUROPEEN

(11) **EP 4 030 409 B1**
(45) Date de publication et mention de la délivrance du brevet: **07.01.2026**
(21) Numéro de dépôt: 21210301.4
(22) Date de dépôt: 24.11.2021
(51) Int. Cl.: G09B 9/00, F41G 3/26

(54) **SIMULATEUR ET PROCÉDÉ DE SIMULATION À PRÉCISION RENFORCÉE, EN PARTICULIER UN SIMULATEUR DE SYSTÈME D'ARME, ET SYSTÈME D'ARME POURVU D'UN TEL SIMULATEUR**
SIMULATOR UND SIMULATIONSVERFAHREN MIT ERHÖHTER GENAUIGKEIT, INSBESONDERE WAFFENSYSTEMSIMULATOR, UND WAFFENSYSTEM, DAS MIT EINEM SOLCHEN SIMULATOR VERSEHEN IST
ENHANCED PRECISION SIMULATOR AND SIMULATION METHOD, IN PARTICULAR A WEAPON SYSTEM SIMULATOR, AND WEAPON SYSTEM PROVIDED WITH SUCH A SIMULATOR

(30) Priorité: 13.01.2021 FR 2100228
(43) Date de publication de la demande: 20.07.2022
(73) Titulaire: MBDA France, 92350 Le Plessis-Robinson (FR)
(72) Inventeur: CARUEL, Nicolas, 92350 Le Plessis-Robinson (FR); DURUPT, Marc, 92350 Le Plessis-Robinson (FR)
(74) Mandataire: Gevers & Orès

(56) Documents cités:
- DE-A1- 102012 106 883
- FR-A1- 2 968 113
- US-B1- 6 283 756

## Description

### DOMAINE TECHNIQUE

La présente invention concerne un simulateur et un procédé de simulation permettant de renforcer la précision de la simulation, et notamment un simulateur de tir de combat simulant des tirs dans le monde réel en engageant les tirs dans un monde virtuel. Elle concerne également un système d'arme et un système de simulation pourvu d'au moins un tel simulateur.

### ÉTAT DE LA TECHNIQUE

La présente invention s'applique donc plus particulièrement, bien que non exclusivement, à la simulation d'un système d'arme.

Dans le domaine de la simulation instrumentée, les simulations de tir sont généralement régies par une interaction directe entre le tireur et la cible pour permettre à la cible d'être informée qu'elle a été engagée par le tireur dans des conditions telles qu'elle est touchée.

Toutefois, souvent les technologies utilisées ne permettent pas de simuler des tirs dirigés sur des cibles hors de la vue directe du tireur ou hors de portée d'une interaction laser. Pour remédier à cette situation, on utilise des simulateurs qui associent le tireur à la cible via un système central.

Une telle technique fonctionne correctement dans un mode d'utilisation de l'arme, dans lequel le tireur définit les conditions du tir au plus tard au moment de la mise à feu et n'intervient plus ensuite sur la course de la munition. En revanche, elle ne peut pas rendre compte valablement de situations où la munition est guidée et où le tireur découvre sa cible lors du vol de la munition au-dessus de l'obstacle, grâce à un système de vision en temps réel embarqué sur la munition. Dans une telle situation, il découvre souvent également d'autres cibles potentielles, fixes ou mobiles, vers l'une desquelles il pourra choisir de diriger la munition. En simulation, il est alors important que ces cibles invisibles du sol à la position du tireur soient représentées dans son viseur.

Par le brevet FR 2 968 113, on connaît un procédé de simulation de tirs au-delà de la vue directe. Dans ce cas, lors de la simulation d'un missile guidé par image, la vue réelle par le viseur réel du système d'arme est remplacée par une image de réalité virtuelle incrustée dans le viseur. Cette image de réalité virtuelle est générée à l'aide d'une base de données du terrain et d'éléments bâtis, sur laquelle sont placées des images représentatives des acteurs à leur position en temps réel. Ces images sont rafraichies périodiquement pour permettre de représenter l'évolution de la position des acteurs due à leurs mouvements et pour permettre de rendre compte de l'évolution du point de vue à partir du missile en progression, et de la position de son capteur d'imagerie. La position des acteurs est fournie par le système central à l'aide de moyens de communication.

Cependant, il apparaît des limitations lors de la mise en œuvre de ce procédé. En particulier, les imprécisions du système dues aux imperfections de l'orientation des visées et de l'armement, et de la mesure de la localisation des acteurs, et à l'approximation de la base de données du terrain et des éléments bâtis, et également à la latence des communications et à la discrétisation de la datation des évènements, conduisent à des écarts relatifs de positionnement des acteurs et des éléments du terrain (et des éléments bâtis) dans l'environnement virtuel par rapport au positionnement des acteurs sur le terrain réel. La gêne est limitée dans les situations où le tireur ne voit pas les cibles potentielles en direct.

Cependant, le système d'arme n'interdisant pas d'engager des cibles en vue directe, il apparaît des situations où le tireur est en mesure de comparer la vue virtuelle qui lui est présentée dans le viseur et la vue réelle qu'il a du terrain. Les imperfections du système précité peuvent alors conduire à une incohérence de représentation de la situation tactique présentée par chacune des vues, de nature à perturber les acteurs et les entraînements dans lesquels ils sont engagés, dans la mesure où la conduite à tenir serait différente selon les deux interprétations de la situation.

Cette solution usuelle n'est donc pas complètement satisfaisante.

### EXPOSÉ DE L'INVENTION

L'invention est exposée dans le jeu de revendications joint. La présente invention a pour objet de remédier aux inconvénients précités, en proposant un procédé de simulation à précision renforcée.

Pour ce faire, elle concerne un procédé de simulation au moins un champ de vision d'un élément de vision (en particulier un viseur) d'un simulateur, ledit élément de vision affichant une image virtuelle d'un monde virtuel représentatif d'un monde réel situé dans son champ de vision, l'image virtuelle comprenant un ou plusieurs acteurs virtuels représentatifs d'acteurs réels situés sur le terrain, ledit procédé comportant une suite d'étapes successives comprenant une étape de génération de l'image virtuelle, l'image virtuelle étant définie selon une référence d'orientation et une référence de visée et étant générée à partir au moins de données d'une base de données de terrain, de la position du simulateur sur le terrain et de la position du ou desdits acteurs réels sur le terrain, l'image virtuelle affichée sur l'élément de vision étant dite courante.

Selon l'invention, ladite suite d'étapes successives comporte, de plus :
- une étape de génération d'une image dite captée consistant à générer l'image captée à partir de mesures d'écartométrie et de télémétrie relatives à un ou plusieurs acteurs réels dont chacun est équipé d'un rétro-réflecteur, les mesures d'écartométrie et de télémétrie étant réalisées par le simulateur à l'aide d'un télémètre générant des émissions de télémétrie reçues et renvoyées par les rétro-réflecteurs équipant les acteurs réels ;
- une étape de comparaison consistant à comparer l'image virtuelle courante et l'image captée de manière à déterminer au moins une valeur d'erreur représentative d'une erreur d'orientation et/ou de visée, ladite comparaison étant réalisée en déterminant l'écart entre la position d'au moins un acteur dans l'image virtuelle et la position de ce même acteur dans l'image captée; et
- une étape de recalage consistant à recaler la référence d'orientation et/ou la référence de visée de l'image virtuelle pour corriger ladite valeur d'erreur de manière à créer une image virtuelle optimisée, cette image virtuelle optimisée étant alors affichée sur l'élément de vision à la place de l'image virtuelle courante.

Ainsi, grâce à l'invention, on renforce la précision de la simulation en affichant dans l'élément de vision (notamment un viseur) une image virtuelle dont le positionnement a été optimisé en étant adapté à la position effective d'un ou de plusieurs acteurs, position qui a été déterminée dans l'image captée à partir de mesures d'écartométrie et de télémétrie.

Dans le cadre de la présente invention, un acteur (réel) peut être une personne ou un véhicule. Il peut également s'agir d'un bâtiment, d'un élément d'infrastructure, ou d'un élément ou repère sur le terrain. L'acteur (réel) peut être fixe ou mobile.

Dans un mode de réalisation préféré, l'étape de génération de l'image virtuelle comprend au moins les sous-étapes suivantes :
- une sous-étape consistant à déterminer la position du simulateur sur le terrain ;
- une sous-étape consistant à déterminer la position des acteurs sur le terrain ; et
- une sous-étape consistant à créer l'image virtuelle en représentant l'emplacement des acteurs dans un cône autour de la référence d'orientation avec un sommet placé sur la référence de visée de l'élément de vision.

De façon avantageuse, l'étape de génération de l'image virtuelle affiche, de plus, sur l'image virtuelle une représentation (virtuelle), imagée ou infrarouge, d'au moins une partie du terrain situé dans le champ de vision de l'élément de vision, à partir de la base de données de terrain.

En outre, avantageusement, l'étape de génération de l'image captée comprend au moins les sous-étapes suivantes :
- une sous-étape consistant à réaliser, à l'aide du télémètre, des émissions de télémétrie dans différentes directions dans un cône autour de la référence d'orientation de l'élément de vision et à réaliser une mesure de télémétrie dans chacune des directions où l'émission de télémétrie est renvoyée vers le télémètre ;
- une sous-étape consistant à réaliser une mesure des angles de site et d'azimut de l'orientation de chacune des directions ayant fait l'objet d'une mesure de télémétrie ;
- une sous-étape consistant à utiliser les mesures des angles de site et d'azimut autour de la référence d'orientation pour créer une image desdites directions représentées par des points dans un plan où l'angle d'azimut est en abscisse et l'angle de site est en ordonnée ; et
- une sous-étape consistant à créer une image 3D (en trois dimensions) en associant à chacun desdits points la distance correspondante obtenue par la mesure de télémétrie correspondante, cette image 3D représentant l'image captée.

Par ailleurs, de façon avantageuse, l'étape de comparaison détermine la valeur d'erreur en utilisant le ou les écarts suivants :
- l'écart relatif à un seul acteur ; ou
- les écarts (éventuellement pondérés) relatifs à l'ensemble des acteurs ; ou
- les écarts (éventuellement pondérés) relatifs à certains des acteurs qui ont été sélectionnés selon au moins un critère particulier, tel qu'un critère de distance par exemple.

Avantageusement, ladite suite d'étapes successives peut être mise en œuvre, au moins :
- de façon périodique ; ou
- lors d'une manipulation d'un élément particulier par un opérateur.

En outre, de façon avantageuse, le procédé comporte une étape supplémentaire consistant à transmettre la référence d'orientation et/ou la référence de visée, obtenues après le recalage, à au moins un dispositif utilisateur.

La présente invention concerne également un simulateur pour simuler au moins le champ de vision d'un élément de vision, ledit élément de vision du simulateur affichant une image virtuelle d'un monde virtuel représentatif d'un monde réel situé dans son champ de vision, l'image virtuelle comprenant un ou plusieurs acteurs virtuels représentatifs d'acteurs réels situés sur le terrain, ledit simulateur comportant également une unité de génération de l'image virtuelle, l'image virtuelle étant définie selon une référence d'orientation et une référence de visée et étant générée à partir au moins de données d'une base de données de terrain, de la position du simulateur sur le terrain et de la position du ou desdits acteurs réels sur le terrain, l'image virtuelle affichée dans l'élément de vision étant dite courante.

Selon l'invention, ledit simulateur comporte, de plus :
- un télémètre (laser) configuré pour pouvoir réaliser des mesures d'écartométrie et de télémétrie ;
- une unité de génération d'une image dite captée configurée pour générer l'image captée à partir de mesures d'écartométrie et de télémétrie relatives à un ou plusieurs acteurs dont chacun est équipé d'un rétro-réflecteur, les mesures d'écartométrie et de télémétrie étant réalisées par le simulateur à l'aide du télémètre générant des émissions de télémétrie qui sont reçues et renvoyées par les rétro-réflecteurs équipant les acteurs ;
- une unité de comparaison configurée pour comparer l'image virtuelle courante et l'image captée de manière à déterminer au moins une valeur d'erreur représentative d'une erreur d'orientation et/ou de visée, ladite comparaison étant réalisée en déterminant l'écart entre la position d'au moins un acteur dans l'image virtuelle et la position de ce même acteur dans l'image captée; et
- une unité de recalage configurée pour recaler la référence d'orientation et/ou la référence de visée de l'image virtuelle pour corriger ladite valeur d'erreur de manière à créer une image virtuelle optimisée, cette image virtuelle optimisée étant alors affichée sur l'élément de vision à la place de l'image virtuelle courante.

Dans un mode de réalisation particulier, ledit simulateur comporte, de plus, au moins l'un des éléments suivants :
- une unité d'émission et de réception de données :
- la base de données de terrain ;
- une interface homme-machine ;
- au moins un capteur pour déterminer la position du simulateur ;
- au moins un capteur pour déterminer la référence d'orientation et/ou la référence de visée de l'élément de vision.

Par ailleurs, dans un premier mode de réalisation, le simulateur correspond à un simulateur de tir de combat simulant des tirs dans le monde réel en engageant les tirs dans un monde virtuel reconstitué à partir de la position d'acteurs dans le monde réel.

En outre, dans un second mode de réalisation, le simulateur correspond à un simulateur de dispositif d'observation.

Par ailleurs, la présente invention concerne également un système d'arme comportant au moins un simulateur tel que celui décrit ci-dessus.

Avantageusement, le système d'arme peut être l'un des types suivants :
- une arme pourvue d'un canon, par exemple un lance-missiles ou un lance-roquettes ;
- un missile balistique ;
- un missile guidé.

Dans un mode de réalisation préféré, le système d'arme comporte un dispositif laser générant une simulation de tir et ce dispositif laser est utilisé comme télémètre par le simulateur.

La présente invention concerne, en outre, un système de simulation. Selon l'invention, ce système de simulation comporte :
- au moins un système d'arme tel que décrit ci-dessus, pourvu d'au moins un simulateur ;
- des rétro-réflecteurs équipant un ou plusieurs acteurs ;
- des moyens pour déterminer la position du ou des acteurs ;
- un dispositif central configuré pour pouvoir communiquer au moins avec le simulateur dudit système d'arme.

Dans un mode de réalisation préféré, au moins plusieurs desdits acteurs équipés de rétro-réflecteurs sont équipés, chacun, d'un système d'arme tel que celui décrit ci-dessus, qui est pourvu d'au moins un simulateur. Ces acteurs sont donc à la fois des tireurs potentiels et des cibles potentielles.

### BRÈVE DESCRIPTION DES FIGURES

D'autres avantages et caractéristiques ressortiront mieux de la description qui va suivre de plusieurs modes de réalisation de l'invention, donnés à titre d'exemples non limitatifs, en se référant notamment aux figures annexées. Sur ces figures, des références identiques désignent des éléments semblables.
La figure 1 est le schéma synoptique d'un mode de réalisation particulier d'un simulateur conforme à l'invention.
La figure 2 est le schéma synoptique d'un mode de réalisation particulier d'un système de simulation conforme à l'invention.
La figure 3 présente schématiquement les étapes principales d'un procédé de simulation mis en œuvre à l'aide du simulateur de la figure 1.
Les figures 4A à 4F montrent différentes représentations permettant de bien expliquer la mise en œuvre du procédé de simulation lorsqu'il est appliqué à seul un acteur réel.
Les figures 5A à 5F sont similaires, respectivement, aux figures 4A à 4F, à la différence que l'acteur réel représente la cible qui est engagée dans le tir simulé.
Les figures 6A à 6F montrent différentes représentations permettant de bien expliquer la mise en œuvre du procédé de simulation lorsqu'il est appliqué à une pluralité d'acteurs réels.

### DESCRIPTION DÉTAILLÉE

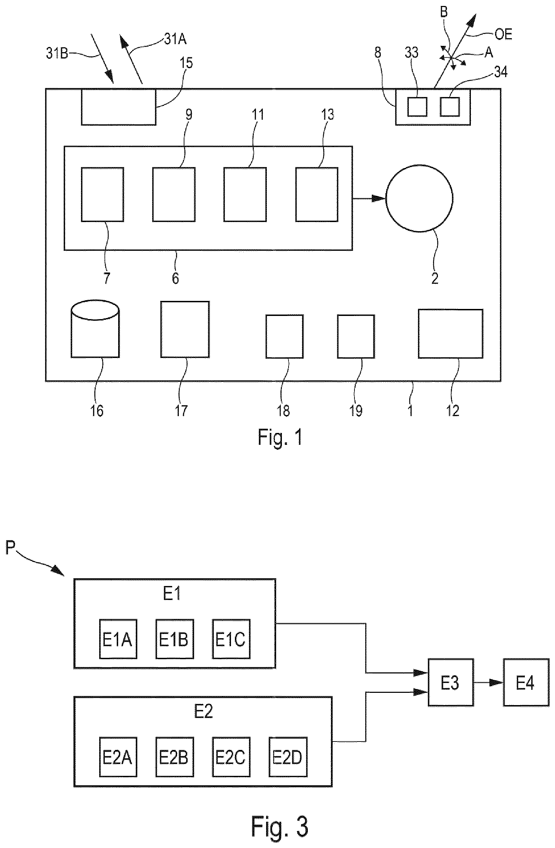

Le simulateur 1 représenté très schématiquement sur la figure 1 et permettant d'illustrer l'invention, est un simulateur d'au moins un champ de vision d'un élément de vision (optique).

Dans la description suivante, l'élément de vision est décrit en tant que viseur 2, en particulier un viseur d'un système d'arme 4. Toutefois, dans le cadre de la présente invention, l'élément de vision peut également être un autre élément optique présentant un champ de vision, par exemple un élément optique faisant partie d'un système de guidage visuel notamment d'un missile.

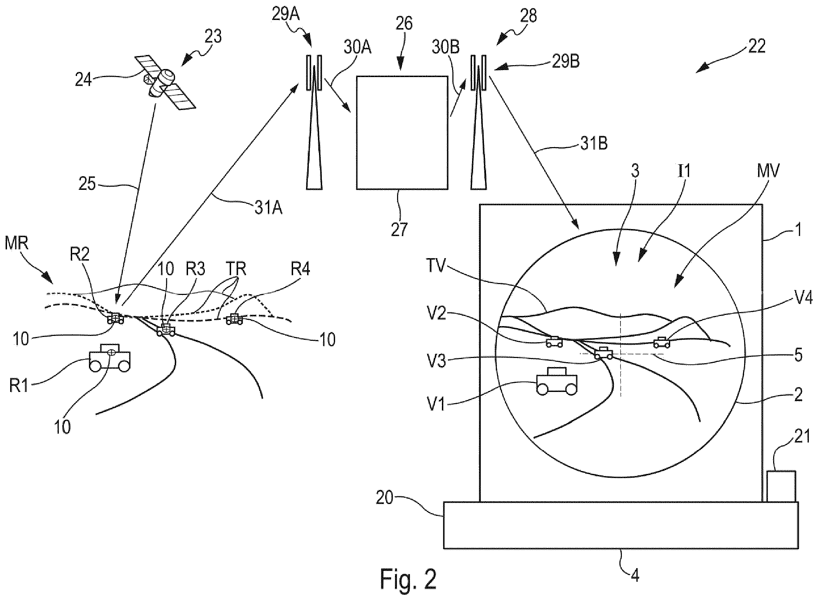

Le viseur 2 affiche une image virtuelle I1 d'un monde virtuel MV représentatif du monde réel MR situé dans et autour du champ de vision 3 du viseur 2 (c'est-à-dire de la partie de l'espace considérée par le viseur 2), comme représenté sur la figure 2. L'image virtuelle I1 comprend un ou plusieurs acteurs virtuels Vi représentatifs d'acteurs réels Ri situés sur le terrain TR, à savoir les acteurs virtuels V1, V2, V3 et V4 représentatifs des acteurs réels R1, R2, R3 et R4 représentés sur la figure 2. Le viseur 2 est également pourvu d'un réticule 5 sous forme de croix.

Le terrain TR du monde réel MR (montré sur la partie gauche de la figure 2) est représenté en différents tracés (continu, tirets, ...) sur cette figure 2 pour mettre en évidence la profondeur. Dans un mode de réalisation préféré, l'image virtuelle I1 comprend également une représentation imagée TV (ou infrarouge) d'au moins une partie du terrain TR situé dans le champ de vision du viseur 2.

Dans le cadre de la présente invention, les acteurs réels Ri peuvent être des personnes, par exemple des fantassins ennemis, ou des véhicules, notamment ennemis, tels que par exemple des chars. Il peut également s'agir de bâtiments, d'éléments d'infrastructure, ou de repères sur le terrain. Les acteurs réels Ri peuvent être fixes ou mobiles.

Le simulateur 1 comporte, comme représenté sur la figure 1, une unité de traitement 6 pourvue d'une unité de génération 7 configurée pour générer l'image virtuelle I1. L'image virtuelle l1 est définie, de façon usuelle, selon une référence d'orientation et une référence de visée et est générée à partir au moins de données d'une base de données du terrain, de la position du simulateur 1 sur le terrain TR et de la position desdits acteurs réels Ri sur le terrain TR. L'image virtuelle I1 qui est affichée, à l'instant présent (ou courant), dans le viseur 2 est dite courante.

Le simulateur 1 comporte également, comme représenté sur la figure 1, un télémètre 8 laser configuré pour pouvoir réaliser des mesures d'écartométrie et de télémétrie, comme précisé ci-dessous. Dans la description suivante, le télémètre 8 peut être cité aussi bien pour réaliser de mesures de télémétrie que pour réaliser des mesures d'écartométrie.

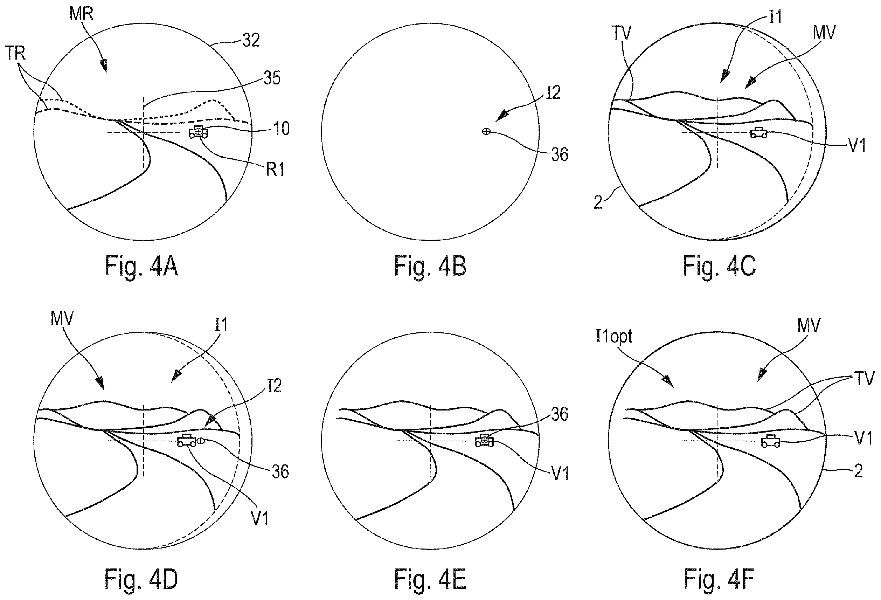

Pour renforcer la précision de la simulation, l'unité de traitement 6 comporte, en plus de l'unité de génération 7 :
- une unité de génération 9 configurée pour générer une image dite captée l2, à partir de mesures d'écartométrie et de télémétrie relatives à un ou plusieurs acteurs réels Ri dont chacun est équipé d'un rétro-réflecteur 10. Les rétro-réflecteurs 10 peuvent, par exemple, être des rétro-réflecteurs usuels à coin de cube. Les mesures d'écartométrie et de télémétrie sont réalisées par le simulateur 1 à l'aide du télémètre 8. Pour ce faire, le télémètre 8 laser génère des émissions de télémétrie (laser) qui sont reçues et renvoyées par les rétro-réflecteurs 10 équipant les acteurs réels Ri ;
- une unité de comparaison 11 configurée pour comparer l'image virtuelle I1 courante et l'image captée l2 (générée par l'unité de génération 9). Par cette comparaison, l'unité de comparaison 11 détermine, le cas échéant, une valeur (ou fonction) d'erreur représentative d'une erreur d'orientation et/ou de visée ; et
- une unité de recalage 13 configurée pour recaler la référence d'orientation et/ou la référence de visée de l'image virtuelle afin de corriger ladite valeur (ou fonction) d'erreur de manière à créer une image virtuelle I1opt optimisée. Cette image virtuelle optimisée I1opt est alors affichée sur le viseur 2 à la place de l'image virtuelle courante, comme représenté notamment sur les figures 4F, 5F et 6F.

Par ailleurs, ledit simulateur 1 comporte, en fonction du mode de réalisation envisagé et comme précisé ci-dessous, un ou plusieurs des éléments suivants représentés sur la figure 1 :
- une unité de transmission 15 de données, aptes à recevoir des données et, selon le mode de réalisation, également à émettre des données :
- une base de données 16 comprenant des données du terrain TR ;
- une interface homme-machine 17 ;
- au moins un capteur 18 pour déterminer la position du simulateur 1 ; et
- au moins un capteur 19 pour déterminer la référence d'orientation et/ou la référence de visée du viseur 2.

En fonction du type de simulation qu'il réalise, le simulateur 1 comporte également un ensemble 12 d'éléments et de moyens usuels non décrits davantage, qui aident à la mise en œuvre de la simulation.

Dans un mode de réalisation préféré, précisé ci-dessous, le simulateur 1 correspond à un simulateur de tir de combat qui simule des tirs dans le monde réel en engageant les tirs dans le monde virtuel reconstitué à partir de la position des acteurs dans le monde réel.

Dans un mode de réalisation préféré, le simulateur 1 fait partie d'un système d'arme 4, représenté schématiquement sur la figure 2. Le système d'arme 4 comporte, en plus, du simulateur 1, un ensemble 20 de moyens et d'équipements usuels. Ces moyens usuels qui dépendent du type de système d'arme sont connus et ne sont pas décrits davantage ci-dessous.

A titre d'exemple, le système d'arme 4 peut être l'un des types suivants :
- une arme pourvue d'un canon, par exemple un fusil, un lance-roquettes ou un lance-missiles ;
- un missile balistique ;
- un missile guidé.

Dans un mode de réalisation préféré, le système d'arme 4 comporte un dispositif laser 21 usuel, générant une simulation de tir. Dans ce mode de réalisation préféré, ce dispositif laser 21 est utilisé comme télémètre 8 par le simulateur 1. Dans ce cas, dans une application particulière, on utilise les fonctionnalités laser usuellement mises en œuvre pour simuler des tirs balistiques ou les tirs de missiles téléguidés en vue directe de la cible, pour recaler l'origine et l'orientation de la vue virtuelle affichée dans le viseur afin que la situation tactique dans l'environnement virtuel soit représentative de celle observée dans l'environnement réel.

Le simulateur 1 fournit, ainsi, une réplique de la visée du système d'arme 4 dans le monde virtuel et détermine dans le monde virtuel le résultat du tir entre le système d'arme de simulation et une cible réelle (ou des cibles réelles). Le renforcement de la précision de la simulation, obtenu grâce aux éléments précités du simulateur 1, est mis en œuvre pour simuler l'engagement du tir et pour simuler le tir.

Par ailleurs, dans une application préférée, le système d'arme 4 fait partie d'un système de simulation 22 représenté sur la figure 2.

Dans un mode de réalisation préféré, ce système de simulation 22 comporte :
- un ou plusieurs systèmes d'arme 4 pourvus, chacun, d'un simulateur 1 ;
- une pluralité d'acteurs Ri (réels) équipés de rétro-réflecteurs 10. Dans un mode de réalisation préféré, dans le système de simulation 22, plusieurs acteurs équipés de rétro-réflecteurs comportent un système d'arme pourvu d'un simulateur. Ces acteurs sont, dans ce cas, à la fois des tireurs potentiels et des cibles potentielles ;
- des moyens 23 pour déterminer la position des acteurs Ri. A titre d'illustration, on a représenté sur la figure 2, un satellite 24 d'un système de positionnement par satellites de type GPS (pour « Global Positioning System » en anglais), faisant partie des moyens 23 et permettant de fournir aux acteurs Ri leur localisation, comme illustré par une flèche 25 ; et
- un dispositif central 26 comportant une unité de traitement 27 et un système de communication 28. Sur l'exemple de la figure 2, le système de communication 28 comprend deux systèmes radio 29A et 29B raccordés à l'unité de traitement 27 comme illustré par des liaisons 30A et 30B. Les systèmes radio 29A et 29B sont représentés par un mât et deux antennes. Il est également envisageable de prévoir un seul système radio assurant l'ensemble des fonctions.

Le système de communication 28 permet aux acteurs réels Ri de fournir au dispositif central 26 des informations contenant leur localisation, comme illustré par une flèche 31A. Il permet également au dispositif central 26 de fournir au(x) simulateur(s) 1 des informations sur les acteurs à positionner dans la vue virtuelle du système d'arme 4, comme illustré par une flèche 31B.

Le simulateur 1, tel que décrit ci-dessus, met en œuvre un procédé de simulation (ci-après « procédé P ») pour renforcer la précision de la simulation, notamment de la simulation au moins du champ de vision 3 d'un élément de vision (viseur 2).

A cet effet, ledit procédé P comprend, comme représenté sur la figure 3, une suite d'étapes E1 à E4 comprenant :
- une étape de génération E1, mise en œuvre par l'unité de génération 7 (figure 1), consistant à générer une image virtuelle I1 (à réalité virtuelle), l'image virtuelle I1 étant définie selon une référence d'orientation et une référence de visée et étant générée à partir au moins de données de la base de données 16, de la position du simulateur 1 sur le terrain et de la position du ou des acteurs réels sur le terrain, l'image virtuelle I1 ainsi générée étant affichée sur le viseur 2 (figures 4C, 5C et 6C) ;
- une étape de génération E2, mise en œuvre par l'unité de génération 9 (figure 1), consistant à générer une image captée l2. L'image captée l2 est générée à l'étape de génération E2 à partir de mesures d'écartométrie et de télémétrie relatives à un ou plusieurs acteurs Ri dont chacun est équipé d'un rétro-réflecteur 10. Les mesures d'écartométrie et de télémétrie sont réalisées par le simulateur 1 à l'aide du télémètre 8 générant des émissions de télémétrie, qui sont reçues et renvoyées par les rétro-réflecteurs 10 équipant les acteurs réels Ri ;
- une étape de comparaison E3, mise en œuvre par l'unité de comparaison 11 (figure 1), consistant à comparer l'image virtuelle I1 courante et l'image captée l2 de manière à déterminer au moins une valeur d'erreur représentative d'une erreur d'orientation et/ou de visée ; et
- une étape de recalage E4, mise en œuvre par l'unité de comparaison 13 (figure 1), consistant à recaler la référence d'orientation et/ou la référence de visée de l'image virtuelle pour corriger ladite valeur d'erreur de manière à créer une image virtuelle I1opt optimisée, cette image virtuelle I1opt optimisée étant alors affichée sur le viseur 2 à la place de l'image virtuelle courante, comme représenté sur les figures 4F, 5F et 6F. Cette image virtuelle l1opt optimisée devient alors l'image virtuelle actuelle.

Comme indiqué ci-dessus, l'image virtuelle 11, générée à l'étape de génération E1, est définie selon une référence d'orientation et une référence de visée, et elle est générée à partir au moins de données de la base de données 16, de la position du simulateur 1 sur le terrain (et donc du système d'arme 4 pourvu du simulateur 1) et de la position du ou des différents acteurs réels sur le terrain TR.

Plus précisément :
- on fixe une référence de visée proche de l'origine de visée du système d'arme 4. La référence de visée peut être définie par des dispositifs de localisation. Pour ce faire, on peut utiliser un système GPS, mais également des triangulations par rapport à des points connus de l'environnement. Le cas où la référence de visée est proche de l'origine de visée du système d'arme 4 est un cas particulier avantageux. Le système d'arme 4 dispose d'un axe de référence passant par la référence de visée ; et
- on fixe une référence d'orientation. Dans un mode de réalisation avantageux, la référence d'orientation peut coïncider avec la direction de visée du système d'arme 4 ou être proche d'elle.

De plus, le simulateur 1 dispose de la base de données 16 (figure 1) comprenant des données numériques du terrain TR (figure 2). La base de données 16 peut être constituée de grandeurs numériques permettant la localisation des points du terrain dans un repère absolu. La base de données 16 peut être complétée par tous les objets utiles à la simulation ou à l'exercice réalisé avec le système d'arme, en particulier les bâtiments et les objets de fabrication humaine, ainsi que la végétation.

L'étape de génération E1 du procédé P comprend au moins les sous-étapes suivantes :
- une sous-étape E1A consistant à déterminer la position du simulateur 1 sur le terrain TR ;
- une sous-étape E1B consistant à déterminer la position des acteurs Ri (réels) sur le terrain TR ; et
- une sous-étape E1C consistant à créer l'image virtuelle l1 en représentant l'emplacement des acteurs dans un cône autour de la référence d'orientation avec un sommet placé sur la référence de visée du viseur 2.

Concernant la sous-étape E1A, le simulateur 1 dispose de la position du système d'arme 4 de simulation sur le terrain. Pour les systèmes d'arme mobiles, le simulateur 1 peut disposer de la position rafraîchie à chaque position atteinte ou d'un rafraichissement en temps réel pour les systèmes en déplacement continu. En outre :
- dans un premier mode de réalisation particulier, les données de position résultent de la lecture périodique de capteurs, tels que le capteur 18 faisant par exemple partie d'un système GPS ; et
- dans un second mode de réalisation particulier, les données de position résultent d'une trajectoire modélisée. La modélisation peut être recalée, de temps à autre, par des positions mesurées.

En outre, concernant la sous-étape E1B, le simulateur 1 dispose de la position des acteurs (ou cibles potentielles) sur le terrain. La position des cibles peut être fournie au simulateur 1 du système d'arme 4 par divers moyens en fonction du mode de réalisation envisagé. Plus particulièrement :
- un des moyens consiste à charger les données de position des cibles potentielles dans une base de données (non représentée) du simulateur 1 du système d'arme 4, préalablement à l'exercice ;
- un autre moyen consiste pour le simulateur 1 du système d'arme 4 à recevoir les données de positionnement des cibles potentielles par des moyens de communication, en particulier par le système de communication 28, et ceci à tout moment, avant ou pendant l'exercice.

Pour les cibles potentielles mobiles, le simulateur 1 dispose de la position rafraîchie à chaque position atteinte ou d'un rafraichissement en temps réel pour les cibles en déplacement continu. En outre :
- dans un premier mode de réalisation particulier, les données de position résultent de la lecture périodique de capteurs de la cible potentielle, et elles sont transmises au simulateur 1 (de préférence via le système de communication 28) ; et
- dans un second mode de réalisation particulier, les données de position résultent d'une trajectoire modélisée. La modélisation peut être recalée, de temps à autre, par des positions mesurées.

Par ailleurs, à la sous-étape E1C, le simulateur 1 crée une image virtuelle I1 de la visée en représentant l'emplacement des cibles potentielles dans un cône autour de la référence d'orientation avec un sommet placé sur la référence de visée.

Dans l'image virtuelle, l'unité de génération 7 représente l'emplacement des cibles potentielles par des points représentant l'orientation de la cible virtuelle par rapport à la référence de visée dans un graphe où l'angle d'azimut est en abscisse et l'angle site est en ordonnée. Pour les cas où une cible (ou acteur réel) n'est pas directement visible du tireur, on restitue sa représentation dans l'image virtuelle affichée sur le viseur 2 du système d'arme 4.

Dans un mode de réalisation préféré, l'unité de génération 7 affiche, de plus, à l'étape de génération E1, sur l'image virtuelle I1 (figure 2) une représentation imagée TV (ou infrarouge) d'au moins une partie du terrain TR situé dans le champ du viseur 2, à partir de la base de données 16 comprenant des données du terrain. En outre, dans un mode de réalisation particulier, l'étape de génération E1 peut associer une image orientée découlant d'un modèle 3D de l'acteur considéré à l'emplacement de chaque acteur constituant une cible potentielle. Elle peut également associer une image des bâtiments et/ou de tout objet utile ajouté à la base de données 16 du terrain.

En outre, pour que la visée soit plus réaliste, il est possible d'afficher un objet reproduisant l'aspect d'un acteur générique ou l'aspect de l'acteur réel, dans la mesure où il est connu, à l'emplacement de sa localisation dans l'image virtuelle 11, comme représenté sur la figure 2 pour les acteurs virtuels V1 à V4. En fonction des informations dont dispose le simulateur 1, l'aspect présenté de l'acteur virtuel peut prendre en compte l'angle sous lequel il est vu du simulateur 1.

La sous-étape E1C crée l'image virtuelle 11 (en 3D) en associant à l'emplacement de chacune des cibles potentielles dans l'image virtuelle sa distance par rapport au simulateur (et donc par rapport au système d'arme 4 de simulation).

Par ailleurs, l'étape de génération E2 du procédé P, destinée à générer l'image captée l2, comprend, comme représenté sur la figure 3, au moins les sous-étapes E2A à E2D suivantes :
- une sous-étape E2A consistant à réaliser, à l'aide du télémètre 8 laser, des émissions de télémétrie dans différentes directions dans un cône autour de la référence d'orientation du viseur et à réaliser une mesure de télémétrie dans chacune des directions où l'émission de télémétrie est renvoyée vers le télémètre 8 ;
- une sous-étape E2B consistant à réaliser une mesure des angles de site et d'azimut de l'orientation de chacune des directions ayant fait l'objet d'une mesure de télémétrie ;
- une sous-étape E2C consistant à utiliser les mesures des angles de site et d'azimut autour de la référence d'orientation pour créer une image desdites directions représentées par des points dans un plan où l'angle d'azimut est en abscisse et l'angle de site est en ordonnée ; et
- une sous-étape E2D consistant à créer une image en 3D en associant à chacun desdits points la distance correspondante obtenue par la mesure de télémétrie. Cette image en 3D représente l'image captée l2 générée.

De façon usuelle, comme représenté sur la figure 1, le télémètre 8 émet une onde électromagnétique OE représentant l'émission de télémétrie, et il mesure le temps mis par l'onde électromagnétique OE pour revenir au télémètre 8 après réflexion, notamment par un acteur Ri, représentant une cible potentielle pour le système d'arme 4. La réflexion de l'onde en direction de l'émetteur est avantageusement réalisée en utilisant les rétro-réflecteurs 10, par exemple du type à coin de cube. Les cibles potentielles sont, comme indiqué ci-dessus, équipées de rétro-réflecteurs 10.

Le télémètre 8 est orientable en site et en azimut, comme représenté par des angles A et B sur la figure 1. Le télémètre 8 comprend une unité 32 usuelle de mesure de distance pour les mesures de télémétrie, ainsi qu'une unité 33 usuelle de mesure des angles de site et d'azimut pour les mesures d'écartométrie.

Par ailleurs, l'étape de comparaison E3 du procédé P, qui suit l'étape de génération E2, réalise la comparaison en déterminant au moins l'écart entre la position d'au moins un acteur dans l'image virtuelle I1 et la position de ce même acteur dans l'image captée I2.

L'étape de comparaison E3 détermine la valeur d'erreur en mettant en œuvre une méthode parmi une pluralité de méthodes différentes possibles et en utilisant un ou plusieurs écarts, comme précisé ci-dessous sur la base de différents exemples. En particulier, on peut envisager que :
- la valeur (ou fonction) d'erreur porte uniquement sur une sélection de points des deux images. En particulier, on peut prévoir d'ignorer les points mobiles, ou de sélectionner uniquement les points sur des infrastructures ;
- des filtres peuvent être utilisés pour sélectionner les points des images entrant dans le calcul d'erreur. Certains filtres peuvent éliminer les points n'ayant pas de contrepartie à distance proche dans l'autre image. D'autres filtres peuvent sélectionner les points situés dans une plage de distance prédéfinie ;
- des critères spécifiques peuvent être adoptés lorsqu'il n'apparaît qu'un seul point (ou qu'un seul point sélectionné) dans l'une des deux images ; et
- des pondérations d'erreur peuvent être mises en œuvre, en d'attribuant plus de poids à certains points qu'à d'autres, et en particulier en attribuant plus de poids à des cibles potentielles définitivement fixes, telles qu'un bâtiment par exemple.

L'étape de comparaison E3 détermine la valeur d'erreur en mettant en œuvre l'une des diverses méthodes possibles et en utilisant un ou plusieurs écarts, comme précisé ci-après à la description de différents exemples, en référence aux figures 4A à 4F, 5A à 5F et 6A à 6F.

Les figures 4A à 4F montrent différentes représentations permettant de bien expliquer la mise en œuvre du procédé P tel que décrit ci-dessus, lorsqu'il est appliqué à seul un acteur réel R1 pourvu d'un rétro-réflecteur 10. Plus particulièrement :
- la figure 4A illustre une vue réelle (du monde réel MR) dans un viseur réel 32 du système d'arme 4. Le cercle extérieur représente les limites du viseur réel 32. La croix 35 représente le désignateur de la cible à engager ;
- la figure 4B montre l'image capté l2 (en 3D). Cette image captée l2 comporte comme seul élément une représentation 36 du rétro-réflecteur 10 de l'acteur réel R1. Les éléments de paysage et les cibles ne laissent pas de trace dans cette représentation ;
- la figure 4C montre l'image virtuelle I1 (en 3D) dans le viseur 2 du simulateur 1, qui comprend l'acteur virtuel V1 représentatif de l'acteur réel R1. La partie de courbe en tirets représente le pourtour du viseur virtuel, et la scène est construite à partir de la base de données 16 et du type et de la position des acteurs fournis au simulateur 1, de préférence par le dispositif central 26 ;
- la figure 4D montre la comparaison entre l'image captée l2 (de la figure 4B) et l'image virtuelle l1 (de la figure 4C), mise en œuvre à l'étape de comparaison E3. Les deux images l1 et l2 sont superposées dans une même représentation. On voit qu'il apparaît un écart entre la position de la représentation 36 du rétro-réflecteur 10 de l'image captée I2 et la position de l'acteur virtuel V1 sur lequel devrait se trouver la représentation 36 en absence d'erreur ;
- la figure 4E montre le résultat du recalage de la référence d'orientation, mise en œuvre à l'étape de recalage E4. Pour ce faire, la référence d'orientation de l'image virtuelle I1 est tournée pour mettre en coïncidence la représentation 36 du rétro-réflecteur 10 et la position qu'il occupe sur l'acteur virtuel V1. Au cours de cette opération, les données de paysage issues de la base de données sont tournées d'une même valeur angulaire ; et
- la figure 4F montre l'image virtuelle l1opt optimisée, obtenue par la mise en œuvre du procédé P (destiné à renforcer la précision), telle que visible dans le viseur 2 du système d'arme 4.

Dans le cas où un seul acteur (ou cible) fixe est situé dans le cône du télémètre 8, le simulateur 1 compare sa position issue du télémètre 8 et sa position issue de la localisation transmise par le dispositif central 26. Si, compte-tenu des incertitudes de mesure, la probabilité est forte que la cible positionnée par le télémètre 8 et la cible positionnée dans l'image virtuelle I1 se rapportent à un même objet, le simulateur 1 modifie sa vue en appliquant une correction d'angle conduisant à une nouvelle référence d'orientation et/ou une correction d'origine conduisant à une nouvelle référence de visée dans l'environnement virtuel (dans l'image virtuelle I1opt optimisée affichée sur le viseur 2) de telle sorte qu'il n'apparaisse plus d'écart entre la position issue du télémètre 8 et la position corrigée de la cible issue de la localisation transmise par le dispositif central 26. Le cas échéant, tous les objets et les éléments de paysage sont corrigés de manière identique dans l'image virtuelle I1opt optimisée de manière à garder les distances relatives entre eux.

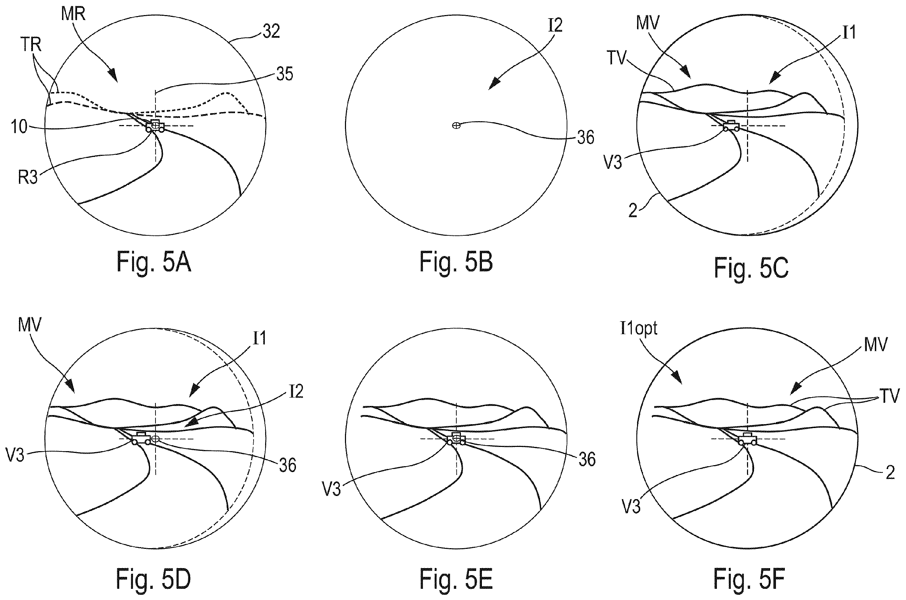

Les figures 5A à 5F (qui montrent différentes représentations permettant d'expliquer la mise en œuvre du procédé P lorsqu'il est appliqué à seul un acteur réel R3 pourvu d'un rétro-réflecteur 10) sont des figures représentant des situations similaires, respectivement, à celles des figures 4A à 4F. L'unique différence est que l'acteur réel R3 est la cible qui est engagée dans le tir simulé. Dans ce cas particulier, qui est fréquent en pratique, la cible (acteur réel R3) est située au centre de la visée, en étant positionnée sous la croix 35 de visée (figure 5A).

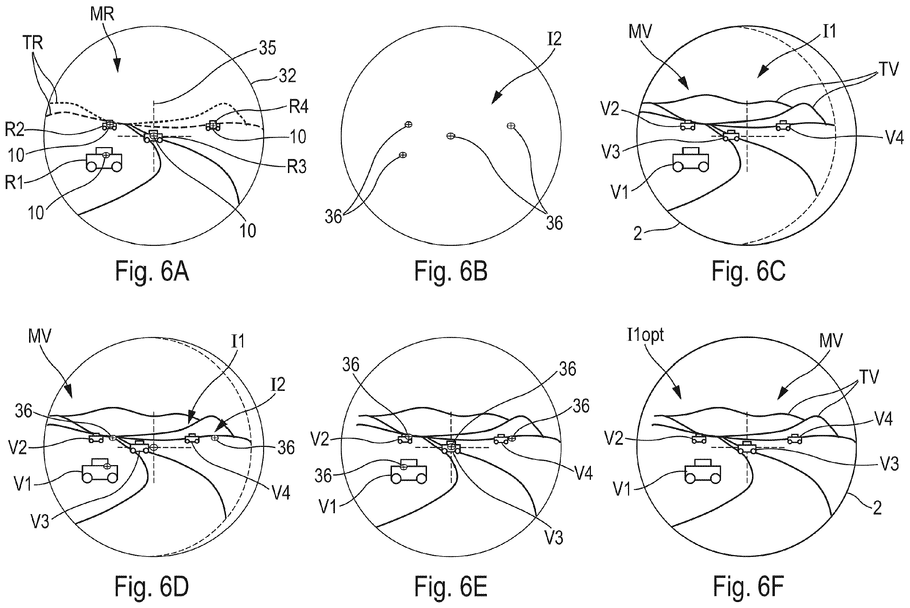

Par ailleurs, les figures 6A à 6F montrent différentes représentations permettant d'expliquer la mise en œuvre du procédé P, lorsqu'il est appliqué à plusieurs acteurs réels R1, R2, R3 et R4 qui sont pourvus, chacun, d'un rétro-réflecteur 10. Ces figures 6A à 6F représentent des situations similaires, respectivement, à celles des figures 4A à 4F. De plus, parmi les acteurs réels R1, R2, R3 et R4, l'acteur réel R3 est une cible qui est située au centre de la visée, en étant positionnée sous la croix 35 de visée (figure 6A).

Dans le cas où plusieurs acteurs fixes se trouvent dans le cône du télémètre 8, le simulateur 1 réalise une comparaison globale telle que la vue constituée par l'ensemble des positions des acteurs issues du télémètre 8 (image captée l2) et la vue constituée par l'ensemble des positions des acteurs issues de leurs localisations transmises par le dispositif central 26 (image virtuelle 11) sont déplacées l'une par rapport à l'autre en origine et en modifiant la référence d'orientation et la référence de visée de manière à rapprocher chaque position de l'image captée l2 de l'acteur le plus probable parmi les acteurs virtuels présents dans l'image virtuelle I1. Une fonction d'erreur prend en compte l'ensemble des écarts résiduels, deux à deux, entre les positions des acteurs dans l'image captée l2 et leurs positions dans l'image virtuelle I1. Parmi toutes les modifications conjointes de la référence d'orientation et de la référence de visée possibles, celle qui minimise cette fonction d'erreur est retenue comme optimale. La nouvelle référence de visée et la nouvelle référence d'orientation découlant de cette modification sont prises comme nouveau repère pour l'image virtuelle I1opt optimisée (figure 6F). Tous les acteurs et, le cas échéant, tous les objets et les éléments de paysage sont replacés dans ce nouveau repère virtuel, de manière identique, afin de garder les distances relatives entre eux.

Si le simulateur 1 accorde plus d'importance à une partie des acteurs, il peut choisir de restreindre l'analyse précédente à un jeu d'acteurs sélectionné. Il applique alors divers filtres pour éliminer de la comparaison les rétro-réflecteurs observés sur le terrain associé à des avatars qui ne font pas partie des acteurs du jeu d'acteurs sélectionné. Par exemple, un filtrage peut consister à exclure les rétro-réflecteurs qui sont situés dans des plages de distances qui ne correspondent à aucun des acteurs du jeu d'acteurs sélectionné. Dans un autre exemple, le filtrage élimine tous les rétro-réflecteurs dont les écarts angulaires, avec chacun des acteurs sélectionnés, dépassent un angle prédéterminé.

Un cas particulier de la restriction du jeu d'acteurs consiste en une limitation à un seul acteur. Dans ce cas, le filtrage des rétro-réflecteurs vise à ne conserver qu'un seul acteur et on revient au cas décrit ci-dessus relatif un seul acteur.

Par ailleurs, dans le cas où des acteurs sont en mouvement, la mesure de leur position est entachée d'une incertitude supplémentaire due, notamment, à la latence des mesures, qui conduit à un décalage découlant du défaut de simultanéité de la mesure et de sa mise à disposition au simulateur 1, en particulier en raison des délais de transmission de l'information. Cette situation peut être prise en compte :
- en ignorant les acteurs mobiles dans la comparaison globale, si un ou plusieurs acteurs sont situés dans le champ du télémètre 8. Le calcul de la correction est réalisé sans prendre en compte les acteurs mobiles, mais leur position est corrigée dans l'image virtuelle I1opt optimisée, via les corrections réalisées lors du recalage ; ou
- en les prenant en compte avec un poids plus faible dans la fonction d'erreur, en lien avec une incertitude de positionnement plus élevée les concernant ; ou
- si les acteurs sont peu nombreux, ou si l'acteur mobile est seul dans le champ du télémètre 8, en prenant en compte des mesures successives et en affinant son estimation de localisation dans l'image virtuelle par une démarche prédictive établie sur la base de mesures successives de position et/ou de vitesse, tout en appliquant la démarche associée aux acteurs fixes pour un seul acteur ou pour plusieurs acteurs dans le champ du télémètre 8, selon la situation.

On notera en outre que :
- un cas particulier fréquent consiste à faire coïncider l'axe optique avec l'axe d'orientation initial ;
- un autre cas particulier fréquent est celui où l'acteur fixe ou un des acteurs fixes est la cible à engager en tir de simulation. Dans ce cas, l'axe optique est proche de la direction de visée pour engager cet acteur, mais pas nécessairement identique, un écart pouvant notamment être causé par la prise en compte de corrections balistiques.

Le simulateur 1 et/ou le procédé P, tels que décrits ci-dessus, peuvent être utilisés pour différents types de systèmes d'arme. En particulier, ils peuvent être utilisés pour simuler :
- des armes dotées d'un système de visée solidaire de l'arme permettant d'engager des cibles en vue directe ;
- des armes dotées d'un système de visée solidaire de la munition permettant d'engager des cibles vues par la munition à toutes les étapes du vol ;
- des armes dotées des deux types de visée précédemment cités.

Ils peuvent également être utilisés pour simuler :
- des armes de type canon ;
- des armes de type missile balistique ;
- des armes de type missile guidé (par fil, par fibre optique, par radio, par laser) ;
- une lunette d'observateur de tir.

Par ailleurs, le simulateur 1 et/ou le procédé P, tels que décrits ci-dessus, peuvent être mis en œuvre pour différentes situations. En particulier, ils peuvent être mis en œuvre :
- pour simuler l'engagement du tir. Dans ce cas, le tir peut être activé en coïncidence avec une étape de manipulation de l'arme de simulation, telle que par exemple sa prise en main, une levée de sécurités, une pression sur une queue de détente ou un bouton de mise à feu, ....
- périodiquement, pendant tout ou partie du vol simulé de la munition ;
- épisodiquement ou périodiquement, pendant les phases de visée et pendant tout ou partie de la durée des observations réalisées à l'aide du viseur (que ce soit pour une visée préalable au tir, ou pour une observation d'une situation tactique).

Par ailleurs, le simulateur 1 peut également être utilisé pour fournir, dans un simulateur de moyen d'observation, une réplique de la vue de la situation tactique dans le monde virtuel, dans lequel le procédé P est mis en œuvre pour simuler les observations captées par un observateur de tir.

Par ailleurs, dans un mode de réalisation préféré, la nouvelle référence d'orientation et/ou la nouvelle référence de visée, générées à l'étape de recalage (par l'unité de recalage 13) sont transmises au dispositif central 26 (par exemple par l'unité de transmission 15).

Dans le cadre de la présente invention, on peut utiliser la nouvelle référence d'orientation et/ou la nouvelle référence de visée pour différents besoins d'une simulation tels que la simulation des observations, la simulation des engagements et pour établir la sanction des tirs simulés.

Par ailleurs, dans le cadre de la présente invention, la référence d'orientation et/ou la référence de visée initiales peuvent être obtenues de différentes manières. En particulier :
- la référence d'orientation et la référence de visée initiales peuvent être déterminées par des capteurs (GPS, attitude, nord, ...) équipant le simulateur 1, tel que le capteur 19, ou des capteurs (GPS, attitude, nord, ...) équipant le système d'arme 4 ;
- la référence d'orientation et la référence de visée initiales peuvent être fournies par un opérateur via l'interface homme machine 17 ;
- la référence d'orientation et la référence de visée initiales peuvent être fournies par le dispositif central 26 via le système de communication 28 qui coopère avec l'unité de transmission 15 du simulateur 1.

De plus, on peut prévoir de fournir, à tout moment, une nouvelle référence d'orientation initiale et une nouvelle référence de visée initiale, par exemple en cas de réorientation importante du système d'arme 4.

## Revendications

1. Procédé de simulation d'un champ de vision d'un élément de vision d'un simulateur, ledit élément de vision (2) affichant une image virtuelle (11) d'un monde virtuel (MV) représentatif d'un monde réel (MR) situé dans son champ de vision, l'image virtuelle (11) comprenant un ou plusieurs acteurs virtuels (V1 à V4) représentatifs d'acteurs réels (R1 à R4) situés sur le terrain (TR),
ledit procédé (P) comportant une suite d'étapes successives comprenant une étape de génération (E1) de l'image virtuelle (11), l'image virtuelle (11) étant définie selon une référence d'orientation et une référence de visée et étant générée à partir au moins de données d'une base de données de terrain (16), de la position du simulateur (1) sur le terrain et de la position du ou desdits acteurs réels (R1 à R4) sur le terrain, l'image virtuelle (11) affichée sur l'élément de vision (2) étant dite courante,
**caractérisé en ce que** ladite suite d'étapes successives comporte, de plus :
- une étape de génération (E2) d'une image dite captée (12) consistant à générer l'image captée (12) à partir de mesures d'écartométrie et de télémétrie relatives à l'un ou plusieurs desdits acteurs réels (R1 à R4) dont chacun est équipé d'un rétro-réflecteur (10), les mesures d'écartométrie et de télémétrie étant réalisées par le simulateur (1) à l'aide d'un télémètre (8) générant des émissions de télémétrie reçues et renvoyées par les rétro-réflecteurs (10) équipant les acteurs réels (R1 à R4) ;
- une étape de comparaison (E3) consistant à comparer l'image virtuelle (11) courante et l'image captée (12) de manière à déterminer au moins une valeur d'erreur représentative d'une erreur d'orientation et/ou de visée, ladite comparaison étant réalisée en déterminant l'écart entre la position d'au moins un acteur dans l'image virtuelle (11) et la position de ce même acteur dans l'image captée (12) ; et
- une étape de recalage (E4) consistant à recaler la référence d'orientation et/ou la référence de visée de l'image virtuelle pour corriger ladite valeur d'erreur de manière à créer une image virtuelle optimisée (I1opt), cette image virtuelle optimisée (l1 opt) étant alors affichée sur l'élément de vision (2) à la place de l'image virtuelle courante.

2. Procédé selon la revendication 1,
**caractérisé en ce que** l'étape de génération (E1) de l'image virtuelle (11) comprend au moins les sous-étapes suivantes :
- une sous-étape (E1A) consistant à déterminer la position du simulateur (1) sur le terrain ;
- une sous-étape (E1B) consistant à déterminer la position des acteurs (R1 à R4) sur le terrain ; et
- une sous-étape (E1C) consistant à créer l'image virtuelle (11) en représentant l'emplacement des acteurs dans un cône autour de la référence d'orientation avec un sommet placé sur la référence de visée de l'élément de vision (2).

3. Procédé selon l'une des revendications 1 et 2,
**caractérisé en ce que** l'étape de génération (E1) de l'image virtuelle (11) affiche, de plus, sur l'image virtuelle (11) une représentation (TV) d'au moins une partie du terrain situé dans le champ de vision de l'élément de vision (2), à partir de la base de données de terrain (16).

4. Procédé selon l'une quelconque des revendications précédentes, **caractérisé en ce que** l'étape de génération (E2) de l'image captée (12) comprend au moins les sous-étapes suivantes :
- une sous-étape (E2A) consistant à réaliser, à l'aide du télémètre (8), des émissions de télémétrie (OE) dans différentes directions dans un cône autour de la référence d'orientation de l'élément de vision (2) et à réaliser une mesure de télémétrie dans chacune des directions où l'émission de télémétrie est renvoyée vers le télémètre (8) ;
- une sous-étape (E2B) consistant à réaliser une mesure des angles de site et d'azimut de l'orientation de chacune des directions ayant fait l'objet d'une mesure de télémétrie ;
- une sous-étape (E2C) consistant à utiliser les mesures des angles de site et d'azimut autour de la référence d'orientation pour créer une image desdites directions représentées par des points dans un plan où l'angle d'azimut est en abscisse et l'angle de site est en ordonnée ; et
- une sous-étape (E2D) consistant à créer une image 3D en associant à chacun desdits points la distance correspondante obtenue par la mesure de télémétrie correspondante, cette image 3D représentant l'image captée (12).

5. Procédé selon l'une quelconque des revendications précédentes, **caractérisé en ce que** l'étape de comparaison (E3) détermine la valeur d'erreur en utilisant le ou les écarts suivants :
- l'écart relatif à un seul acteur ; ou
- les écarts relatifs à l'ensemble des acteurs ; ou
- les écarts relatifs à certains des acteurs qui ont été sélectionnés selon au moins un critère particulier.

6. Procédé selon l'une quelconque des revendications précédentes, **caractérisé en ce que** ladite suite d'étapes successives peut être mise en œuvre au moins :
- de façon périodique ; ou
- lors d'une manipulation d'un élément particulier par un opérateur.

7. Procédé selon l'une quelconque des revendications précédentes, **caractérisé en ce qu'**il comporte une étape supplémentaire consistant à transmettre la référence d'orientation et/ou la référence de visée, obtenues après le recalage, à au moins un dispositif utilisateur (26).

8. Simulateur pour simuler le champ de vision d'un élément de vision, ledit élément de vision (2) du simulateur (1) affichant une image virtuelle (11) d'un monde virtuel (MV) représentatif d'un monde réel (MR) situé dans son champ de vision (3), l'image virtuelle (11) comprenant un ou plusieurs acteurs virtuels (V1 à V4) représentatifs d'acteurs réels situés (R1 à R4) sur le terrain,
ledit simulateur (1) comportant également une unité de génération (7) de l'image virtuelle (11), l'image virtuelle (11) étant définie selon une référence d'orientation et une référence de visée et étant générée à partir au moins de données d'une base de données de terrain (16), de la position du simulateur (1) sur le terrain et de la position du ou desdits acteurs réels (R1 à R4) sur le terrain, l'image virtuelle (11) affichée dans l'élément de vision (2) étant dite courante,
**caractérisé en ce qu'**il comporte, de plus :
- un télémètre (8) configuré pour pouvoir réaliser des mesures d'écartométrie et de télémétrie ;
- une unité de génération (9) d'une image dite captée (12) configurée pour générer l'image captée (12) à partir de mesures d'écartométrie et de télémétrie relatives à un ou plusieurs acteurs réels (R1 à R4) dont chacun est équipé d'un rétro-réflecteur (10), les mesures d'écartométrie et de télémétrie étant réalisées par le simulateur (1) à l'aide du télémètre (8) générant des émissions de télémétrie qui sont reçues et renvoyées par les rétro-réflecteurs (10) équipant les acteurs réels (R1 à R4) ;
- une unité de comparaison (11) configurée pour comparer l'image virtuelle (I1) courante et l'image captée (12) de manière à déterminer au moins une valeur d'erreur représentative d'une erreur d'orientation et/ou de visée, ladite comparaison étant réalisée en déterminant l'écart entre la position d'au moins un acteur dans l'image virtuelle (11) et la position de ce même acteur dans l'image captée (12) ; et
- une unité de recalage (13) configurée pour recaler la référence d'orientation et/ou la référence de visée de l'image virtuelle pour corriger ladite valeur d'erreur de manière à créer une image virtuelle optimisée (l1opt), cette image virtuelle optimisée (l1opt) étant alors affichée sur l'élément de vision (2) à la place de l'image virtuelle courante.

9. Simulateur selon la revendication 8,
**caractérisé en ce qu'**il comporte de plus au moins l'un des éléments suivants :
- une unité d'émission et de réception de données (15) ;
- la base de données de terrain (16) ;
- une interface homme-machine (17) ;
- au moins un capteur (18) pour déterminer la position du simulateur (1) ;
- au moins un capteur (19) pour déterminer la référence d'orientation et/ou la référence de visée de l'élément de vision.

10. Simulateur selon l'une des revendications 8 et 9,
**caractérisé en ce qu'**il correspond à l'un des simulateurs suivants :
- un simulateur de tir de combat simulant des tirs dans le monde réel en engageant les tirs dans un monde virtuel reconstitué à partir de la position des acteurs dans le monde réel ;
- un simulateur de dispositif d'observation.

11. Système d'arme,
**caractérisé en ce qu'**il comporte au moins un simulateur (1) selon l'une quelconque des revendications 8 à 10.

12. Système d'arme selon la revendication 11,
**caractérisé en ce qu'**il est l'un des types suivants :
- une arme pourvue d'un canon ;
- un missile balistique ;
- un missile guidé.

13. Système d'arme selon l'une des revendications 11 et 12,
**caractérisé en ce qu'**il comporte un dispositif laser (21) générant une simulation de tir, et **en ce que** ce dispositif laser (21) est utilisé comme télémètre (8) par le simulateur (1).

14. Système de simulation,
**caractérisé en ce qu'**il comporte :
- au moins un système d'arme (4) selon l'une quelconque des revendications 11 à 13, pourvu d'au moins un simulateur (1) ;
- des rétro-réflecteurs (10) équipant un ou plusieurs acteurs (R1 à R4) ;
- des moyens (23) pour déterminer la position du ou des acteurs (R1 à R4) ;
- un dispositif central (26) configuré pour pouvoir communiquer au moins avec le simulateur (1) dudit système d'arme (4).

15. Système de simulation selon la revendication 14,
**caractérisé en ce qu'**au moins plusieurs desdits acteurs équipés de rétro-réflecteurs sont équipés, chacun, d'un système d'arme (4) selon l'une quelconque des revendications 10 à 13, qui est pourvu d'au moins un simulateur (1).

## Patentansprüche

1. Simulationsverfahren eines Sichtfelds eines Sichtelements eines Simulators, wobei das Sichtelement (2) ein virtuelles Bild (I1) einer virtuellen Welt (MV) anzeigt, die repräsentativ ist für eine reale Welt (MR), die sich in seinem Sichtfeld befindet, wobei das virtuelle Bild (I1) einen oder mehrere virtuelle Aktoren (V1 bis V4) umfasst, die repräsentativ sind für reale Aktoren (R1 bis R4), die sich im Gelände (TR) befinden,
wobei das Verfahren (P) eine Abfolge von aufeinanderfolgenden Schritten umfasst, die einen Schritt der Erzeugung (E1) des virtuellen Bildes (I1) umfasst, wobei das virtuelle Bild gemäß einer Ausrichtungsreferenz und einer Zielreferenz definiert ist und ausgehend von mindestens einer Geländedatenbank (16), der Position des Simulators (1) im Gelände und der Position des oder der realen Aktoren (R1 bis R4) im Gelände erzeugt wird, wobei das auf dem Sichtelement (2) angezeigte virtuelle Bild (I1) als aktuell bezeichnet wird,
**dadurch gekennzeichnet, dass** die Abfolge von aufeinanderfolgenden Schritten weiter Folgendes umfasst:
- einen Schritt der Erzeugung (E2) eines als aufgenommen bezeichneten Bildes (12), der darin besteht, das aufgenommene Bild (12) ausgehend von Abstands- und Telemetriemessungen in Bezug auf den einen oder die mehreren realen Aktoren (R1 bis R4) zu erzeugen, von denen jeder mit einem Retroflektor (10) ausgerüstet ist, wobei die Abstands- und Telemetriemessungen von dem Simulator (1) mithilfe eines Telemeters (8) durchgeführt werden, der Telemetrieausstrahlungen erzeugt, die von den Retroreflektoren (10), die die realen Aktoren (R1 bis R4) ausrüsten, empfangen und zurückgeworfen werden,
- einen Schritt des Vergleichs (E3), der darin besteht, das aktuelle virtuelle Bild (I1) und das aufgenommene Bild (I2) derart zu vergleichen, dass mindestens ein Fehlerwert ermittelt wird, der repräsentativ ist für einen Ausrichtungs- und/oder Zielfehler, wobei der Vergleich durchgeführt wird, indem die Abweichung zwischen der Position mindestens eines Aktors im virtuellen Bild (I1) und der Position desselben Aktors im aufgenommenen Bild (12) ermittelt wird; und
- einen Schritt der Neueinstellung (E4), der darin besteht, die Ausrichtungsreferenz und/oder die Zielreferenz des virtuellen Bildes neu einzustellen, um den Fehlerwert derart zu korrigieren, dass ein optimiertes virtuelles Bild (l1opt) erzeugt wird, wobei dieses optimierte virtuelle Bild (l1opt) dann anstelle des aktuellen virtuellen Bildes auf dem Sichtelement (2) angezeigt wird.

2. Verfahren nach Anspruch 1,
**dadurch gekennzeichnet, dass** der Schritt der Erzeugung (E1) des virtuellen Bildes (I1) mindestens die folgenden Teilschritte umfasst:
- einen Teilschritt (E1A), der darin besteht, die Position des Simulators (1) im Gelände zu ermitteln;
- einen Teilschritt (E1B), der darin besteht, die Position der Aktoren (R1 bis R4) im Gelände zu ermitteln; und
- einen Teilschritt (E1C), der darin besteht, das virtuelle Bild (I1) zu erzeugen, indem die Stelle der Aktoren in einem Kegel um die Referenzausrichtung herum mit einem Gipfel, der auf der Zielreferenz des Sichtelements (2) platziert ist, dargestellt wird.

3. Verfahren nach einem der Ansprüche 1 und 2,
**dadurch gekennzeichnet, dass** der Schritt der Erzeugung (E1) des virtuellen Bildes (I1) weiter auf dem virtuellen Bild (I1) eine Darstellung (TV) mindestens eines Teils des Geländes, das sich im Sichtfeld des Sichtelements (2) befindet, ausgehend von der Geländedatenbank (16) anzeigt.

4. Verfahren nach einem der vorstehenden Ansprüche,
**dadurch gekennzeichnet, dass** der Schritt der Erzeugung (E2) des aufgenommenen Bildes (12) mindestens die folgenden Teilschritte umfasst:
- einen Teilschritt (E2A), der darin besteht, mithilfe des Telemeters (8) Telemetrieausstrahlungen (OE) in unterschiedliche Richtungen in einem Kegel um die Ausrichtungsreferenz des Sichtelements (2) herum durchzuführen und eine Telemetriemessung in jeder der Richtungen, in die die Telemetrieausstrahlung zum Telemeter (8) zurückgeworfen wird, durchzuführen;
- einen Teilschritt (E2B), der darin besteht, eine Winkelmessung von Standort und Azimut der Ausrichtung jeder der Richtungen durchzuführen, die Gegenstand einer Telemetriemessung waren;
- einen Teilschritt (E2C), der darin besteht, die Winkelmessungen von Standort und Azimut um die Ausrichtungsreferenz herum zu verwenden, um ein Bild der Richtungen zu erzeugen, die durch Punkte in einer Ebene dargestellt sind, in der der Azimutwinkel auf der Abszisse liegt und der Standortwinkel auf der Ordinate liegt; und
- einen Teilschritt (E2D), der darin besteht, ein 3D-Bild zu erzeugen, indem jedem der Punkte die entsprechende Distanz, die durch die entsprechende Telemetriemessung erhalten wird, assoziiert wird, wobei dieses 3D-Bild das aufgenommene Bild (12) darstellt.

5. Verfahren nach einem der vorstehenden Ansprüche,
**dadurch gekennzeichnet, dass** der Schritt des Vergleichs (E3) den Fehlerwert ermittelt, indem die folgende Abweichung oder die folgenden Abweichungen verwendet werden:
- die relative Abweichung zu einem einzigen Aktor; oder
- die relativen Abweichungen zur Gesamtheit der Aktoren; oder
- die relativen Abweichungen zu manchen der Aktoren, die gemäß mindestens einem bestimmten Kriterium ausgewählt wurden.

6. Verfahren nach einem der vorstehenden Ansprüche,
**dadurch gekennzeichnet, dass** die Abfolge von aufeinanderfolgenden Schritten mindestens ausgeführt werden kann:
- auf periodische Weise; oder
- bei einer Manipulation eines bestimmten Elements durch eine Bedienperson.

7. Verfahren nach einem der vorstehenden Ansprüche,
**dadurch gekennzeichnet, dass** es einen zusätzlichen Schritt umfasst, der darin besteht, die Ausrichtungsreferenz und/oder die Zielreferenz, die nach der Neueinstellung erhalten werden, an mindestens eine Benutzervorrichtung (26) zu übertragen.

8. Simulator zum Simulieren des Sichtfelds eines Sichtelements, wobei das Sichtelement (2) des Simulators (1) ein virtuelles Bild (I1) einer virtuellen Welt (MV) anzeigt, die repräsentativ ist für eine reale Welt (MR), die sich in seinem Sichtfeld (3) befindet, wobei das virtuelle Bild (I1) einen oder mehrere virtuelle Aktoren (V1 bis V4) umfasst, die repräsentativ sind für reale Aktoren (R1 bis R4), die sich im Gelände befinden,
wobei der Simulator (1) ebenfalls eine Erzeugungseinheit (7) des virtuellen Bildes (I1) umfasst, wobei das virtuelle Bild (I1) gemäß einer Ausrichtungsreferenz und einer Zielreferenz definiert ist und ausgehend von mindestens einer Geländedatenbank (16), der Position des Simulators (1) im Gelände und der Position des oder der realen Aktoren (R1 bis R4) im Gelände erzeugt wird, wobei das auf dem Sichtelement (2) angezeigte virtuelle Bild (I1) als aktuell bezeichnet wird,
**dadurch gekennzeichnet, dass** er weiter umfasst:
- ein Telemeter (8), das konfiguriert ist, um Abstands- und Telemetriemessungen durchführen zu können;
- eine Erzeugungseinheit (9) eines als aufgenommen bezeichneten Bildes (12), die konfiguriert ist, um das aufgenommene Bild (12) ausgehend von Abstands- und Telemetriemessungen in Bezug auf einen oder mehrere reale Aktoren (R1 bis R4) zu erzeugen, von denen jeder mit einem Retroflektor (10) ausgerüstet ist, wobei die Abstands- und Telemetriemessungen von dem Simulator (1) mithilfe des Telemeters (8) durchgeführt werden, der Telemetrieausstrahlungen erzeugt, die von den Retroreflektoren (10), die die realen Aktoren (R1 bis R4) ausrüsten, empfangen und zurückgeworfen werden,
- eine Vergleichseinheit (11), die konfiguriert ist, um das aktuelle virtuelle Bild (I1) und das aufgenommene Bild (I2) derart zu vergleichen, dass mindestens ein Fehlerwert ermittelt wird, der repräsentativ ist für einen Ausrichtungs- und/oder Zielfehler, wobei der Vergleich durchgeführt wird, indem die Abweichung zwischen der Position mindestens eines Aktors im virtuellen Bild (I1) und der Position desselben Aktors im aufgenommenen Bild (12) ermittelt wird; und
- eine Neueinstellungseinheit (13), die konfiguriert ist, um die Ausrichtungsreferenz und/oder die Zielreferenz des virtuellen Bildes neu einzustellen, um den Fehlerwert derart zu korrigieren, dass ein optimiertes virtuelles Bild (l1opt) erzeugt wird, wobei dieses optimierte virtuelle Bild (l1opt) dann anstelle des aktuellen virtuellen Bildes auf dem Sichtelement (2) angezeigt wird.

9. Simulator nach Anspruch 8,
**dadurch gekennzeichnet, dass** er weiter mindestens eines der folgenden Elemente umfasst:
- eine Datenübertragungs- und -empfangseinheit (15);
- die Geländedatenbank (16);
- eine Mensch-Maschine-Schnittstelle (17);
- mindestens einen Sensor (18), um die Position des Simulators (1) zu ermitteln;
- mindestens einen Sensor (19), um die Ausrichtungsreferenz und/oder die Zielreferenz des Sichtelements zu ermitteln.

10. Simulator nach einem der Ansprüche 8 und 9,
**dadurch gekennzeichnet, dass** er einem der folgenden Simulatoren entspricht:
- einem Kampfschusssimulator, der Schüsse in der realen Welt simuliert, indem er die Schüsse in eine virtuelle Welt einbezieht, die ausgehend von der Position der Aktoren in der realen Welt nachgebildet wird;
- einem Simulator einer Beobachtungsvorrichtung.

11. Waffensystem,
**dadurch gekennzeichnet, dass** es mindestens einen Simulator (1) nach einem der Ansprüche 8 bis 10 umfasst.

12. Waffensystem nach Anspruch 11,
**dadurch gekennzeichnet, dass** es von einem der folgenden Typen ist:
- eine mit einer Kanone ausgestattete Waffe;
- eine ballistische Rakete;
- eine Lenkwaffe;

13. Waffensystem nach einem der Ansprüche 11 und 12,
**dadurch gekennzeichnet, dass** es eine Laservorrichtung (21) umfasst, die eine Schusssimulation erzeugt, und dadurch, dass diese Laservorrichtung (21) von dem Simulator (1) als Telemeter (8) verwendet wird.

14. Simulationssystem,
**dadurch gekennzeichnet, dass** es umfasst:
- mindestens ein Waffensystem (4) nach einem der Ansprüche 11 bis 13, das mit mindestens einem Simulator (1) ausgestattet ist;
- Retroreflektoren (10), die einen oder mehrere Aktoren (R1 bis R4) ausrüsten;
- Mittel (23), um die Position des oder der Aktoren (R1 bis R4) zu ermitteln;
- eine zentrale Vorrichtung (26), die konfiguriert ist, um mindestens mit dem Simulator (1) des Waffensystems (4) kommunizieren zu können.

15. Simulationssystem nach Anspruch 14,
**dadurch gekennzeichnet, dass** mindestens mehrere der mit Retroreflektoren ausgerüstete Aktoren jeweils mit einem Waffensystem (4) nach einem der Ansprüche 10 bis 13 ausgerüstet sind, das mit mindestens einem Simulator (1) ausgestattet ist.

## Claims

1. A method for simulating a field of vision of a vision element of a simulator, said vision element (2) displaying a virtual image (11) of a virtual world (MV) representative of a real world (MR) located in its field of vision, the virtual image (11) comprising one or more virtual actors (V1 to V4) representative of real actors (R1 to R4) located in the terrain (TR),
said method (P) comprising a series of successive steps comprising a step of generating (E1) the virtual image (11), the virtual image (11) being defined according to an orientation reference and a sighting reference and being generated from at least data of a terrain database (16), of the position of the simulator (1) in the terrain and of the position of said real actor or actors (R1 to R4) in the terrain, the virtual image (11) displayed on the vision element (2) being referred to as current image,
**characterised in that** said sequence of successive steps further comprises:
- a step (E2) of generating an image referred to as captured image (12) consisting in generating the captured image (12) from measurements of angle-error and telemetry relating to one or more of said real actors (R1 to R4), each of which is equipped with a retro-reflector (10), the measurements of angle-error and of telemetry being carried out by the simulator (1) with the aid of a rangefinder (8) generating telemetry emissions received and sent back by the retro-reflectors (10) equipping the real actors (R1 to R4);
- a comparison step (E3) consisting in comparing the current virtual image (11) and the captured image (12) so as to determine at least one error value representative of an orientation and/or sighting error, the comparison being carried out by determining the deviation between the position of at least one actor in the virtual image (11) and the position of this same actor in the captured image (12); and
- a resetting step (E4) consisting in resetting the orientation reference and/or the sighting reference of the virtual image to correct said error value so as to create an optimised virtual image (I1opt), this optimised virtual image (l1opt) then being displayed on the vision element (2) instead of the current virtual image.

2. The method according to claim 1,
**characterised in that** the step of generating (E1) the virtual image (11) comprises at least the following sub-steps:
- a sub-step (E1A) consisting in determining the position of the simulator (1) in the terrain;
- a sub-step (E1B) consisting in determining the position of the actors (R1 to R4) in the terrain; and
- a sub-step (E1C) consisting in creating the virtual image (11) by representing the location of the actors in a cone around the orientation reference with a summit placed on the sighting reference of the vision element (2).

3. The method according to any of claims 1 and 2,
**characterised in that** the step of generating (E1) the virtual image (11) additionally displays on the virtual image (11) a representation (TV) of at least one part of the terrain located in the field of vision of the vision element (2), from the terrain database (16).

4. The method according to any one of the preceding claims,
**characterised in that** the step of generating (E2) the captured image (I2) comprises at least the following sub-steps:
- a sub-step (E2A) consisting in carrying out, with the rangefinder (8), telemetry emissions (OE) in different directions in a cone around the orientation reference of the vision element (2) and carrying out a telemetry measurement in each of the directions where the telemetry emission is sent back to the rangefinder (8);
- a sub-step (E2B) consisting in carrying out a measurement of the elevation and azimuth angles of the orientation of each of the directions which have been the subject of a telemetry measurement;
- a sub-step (E2C) consisting in using the measurements of the elevation and azimuth angles about the orientation reference to create an image of said directions represented by points in a plane where the azimuth angle is on the abscissa and the elevation angle is on the ordinate; and
- a sub-step (E2D) consisting in creating a 3D image by associating to each of said points the corresponding distance obtained by the corresponding telemetry measurement, this 3D image representing the captured image (12).

5. The method according to any one of the preceding claims,
**characterised in that** the comparison step (E3) determines the error value using the following deviation or deviations:
- the deviation relating to a single actor; or
- the deviations relating to all the actors; or
- the deviations relating to some of the actors who were selected according to at least one particular criterion.

6. The method according to any one of the preceding claims,
**characterised in that** said sequence of successive steps can be implemented at least:
- periodically; or
- when a particular element is handled by an operator.

7. The method according to any one of the preceding claims,
**characterised in that** it comprises a further step consisting in transmitting the orientation reference and/or the sighting reference, obtained after the resetting, to at least one user device (26).

8. A simulator for simulating the field of vision of a vision element, said vision element (2) of the simulator (1) displaying a virtual image (11) of a virtual world (MV) representative of a real world (MR) located in its field of vision (3), the virtual image (11) comprising one or more virtual actors (V1 to V4) representative of real actors (R1 to R4) located in the terrain,
said simulator (1) also comprising a unit (7) for generating the virtual image (11), the virtual image (11) being defined according to an orientation reference and a sighting reference and being generated from at least data of a terrain database (16), of the position of the simulator (1) in the terrain and of the position of said real actor or actors (R1 to R4) in the terrain, the virtual image (11) displayed in the vision element (2) being referred to as current,
**characterised in that** it further comprises:
- a rangefinder (8) configured to carry out angle-error and telemetry measurements;
- a unit (9) for generating an image referred to as captured (12) configured to generate the captured image (12) from measurements of angle-error and telemetry relating to one or more real actors (R1 to R4), each of which is equipped with a retro-reflector (10), the angle-error and telemetry measurements being carried out by the simulator (1) with the aid of the rangefinder (8) generating telemetry emissions which are received and sent back by the retro-reflectors (10) equipping the real actors (R1 to R4);
- a comparison unit (11) configured to compare the current virtual image (11) and the captured image (12) so as to determine at least one error value representative of an orientation and/or sighting error, the comparison being carried out by determining the deviation between the position of at least one actor in the virtual image (11) and the position of this same actor in the captured image (12); and
- a resetting unit (13) configured to reset the orientation reference and/or the sighting reference of the virtual image to correct said error value so as to create an optimised virtual image (I1opt), this optimised virtual image (I1opt) then being displayed on the vision element (2) instead of the current virtual image.

9. The simulator of claim 8,
**characterised in that** it further comprises at least one of the following elements:
- a data emission and reception unit (15);
- the terrain database (16);
- a human-machine interface (17);
- at least one sensor (18) for determining the position of the simulator (1);
- at least one sensor (19) for determining the orientation reference and/or the sighting reference of the vision element.

10. The simulator of any of claims 8 and 9,
**characterised in that** it corresponds to one of the following simulators:
- a combat shooting simulator that simulates real-world shooting by engaging the shooting in a virtual world reconstructed from the position of the actors in the real world;
- an observation device simulator.

11. A weapon system,
**characterised in that** it comprises at least one simulator (1) according to any of claims 8 to 10.

12. The weapon system of claim 11,
**characterised in that** it is one of the following types:
- a weapon provided with a barrel;
- a ballistic missile;
- a guided missile.

13. The weapon system of any of claims 11 and 12,
**characterised in that** it comprises a laser device (21) generating a shooting simulation, and **in that** this laser device (21) is used as a rangefinder (8) by the simulator (1).

14. A simulation system,
**characterised in that** it comprises:
- at least one weapon system (4) according to any of claims 11 to 13, provided with at least one simulator (1);
- retro-reflectors (10) equipping one or more actors (R1 to R4);
- means (23) for determining the position of the actor or actors (R1 to R4);
- a central device (26) configured to be able to communicate at least with the simulator (1) of said weapon system (4).

15. The simulation system of claim 14,
**characterised in that** at least several of said actors equipped with retro-reflectors are each equipped with a weapon system (4) according to any of claims 10 to 13, which is provided with at least one simulator (1).
